# FASCICULE DE BREVET EUROPEEN

(11) **EP 2 179 118 B1**
(45) Date de publication et mention de la délivrance du brevet: **02.05.2012**
(21) Numéro de dépôt: 08828781.8
(22) Date de dépôt: 12.06.2008
(51) Int. Cl.: E05B 53/00, B64D 29/06, E05C 1/06

(54) **DISPOSITIF DE VERROUILLAGE**
SPERRVORRICHTUNG
LOCKING DEVICE

(30) Priorité: 20.08.2007 FR 0705919
(43) Date de publication de la demande: 28.04.2010
(73) Titulaire: Aircelle, 76700 Gonfreville L'Orcher (FR)
(72) Inventeur: SOULIER, Pascal-Marie, Paul, Marcel, F-76600 Le Havre (FR); DE SORBAY, Aurélie, F-76600 Le Havre (FR)
(74) Mandataire: Chevalier, Renaud Philippe
(86) Numéro de dépôt international: PCT/FR2008/000808
(87) Numéro de publication internationale: WO 2009/027586

(56) Documents cités:
- EP-A- 1 336 707
- EP-A- 1 493 664
- DE-U1-202005 011 092

## Description

L'invention se rapporte à un dispositif de verrouillage comprenant au moins un système de verrouillage comportant au moins un organe de verrouillage actionnable par l'intermédiaire de moyens de liaison, les moyens de liaison étant déplaçables sur une course déterminée, le déplacement des moyens de liaison sur une première partie de la course permettant l'actionnement de l'organe de verrouillage, alternativement entre une position de déverrouillage de l'organe de verrouillage et une position de verrouillage de celui-ci.

Un exemple d'un dispositif de verrouillage est fourni par le document DE 20 2005 011092 A sur lequel est basé le préambule de la revendication 1.

Un dispositif de verrouillage de ce type est en particulier utilisé afin d'équiper une nacelle, elle-même destinée à équiper un aéronef.

Un aéronef est mu par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière pouvant abriter des moyens d'inversion de poussée et destinée à entourer la chambre de combustion du turboréacteur, et est généralement terminée par une tuyère d'éjection dont la sortie est située en aval du turboréacteur.

Les nacelles modernes sont souvent destinées à abriter un turboréacteur double flux apte à générer par l'intermédiaire des pâles de la soufflante en rotation un flux d'air chaud (également appelé flux primaire) issu de la chambre de combustion du turboréacteur.

Une nacelle présente généralement une structure externe, dite Outer Fixed Structure (OFS), qui définit, avec une structure interne concentrique, dite Inner Fixed Structure (IFS), un canal annulaire d'écoulement, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'avion est ainsi formé par une nacelle et un turboréacteur, et est suspendu à une structure fixe de l'avion, par exemple sous une aile ou sur le fuselage, par l'intermédiaire d'un pylône ou mât rattaché au turboréacteur ou à la nacelle.

La section arrière de la structure externe de la nacelle est usuellement formée d'une première et d'une deuxième demi-coquilles de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles sont généralement montées pivotantes autour d'un axe longitudinal formant charnière en partie supérieure (à 12 heures) de l'inverseur. Les demi-coquilles sont maintenues en position de fermeture au moyen de dispositifs de verrouillage disposés au moins le long d'une ligne de jonction située en partie inférieure (à 6 heures) et dont la commande est accessible par l'opérateur dans la partie inférieure.

Le dispositif de verrouillage du type précité présente les inconvénients exposés ci-après.

Afin de s'assurer du bon fonctionnement du dispositif de verrouillage, il est nécessaire de régler de manière précise la position des moyens de liaison, par l'intermédiaire d'un système de réglage. Un tel réglage permet de compenser les défauts de positionnement entre les différents composants, de s'affranchir des effets de dilatation thermique et de prendre en compte les tolérances de fabrication de chaque composant.

En effet, en cas de mauvais positionnement, il se peut que le système de verrouillage ne soit pas entièrement déverrouillé ou verrouillé, ce qui est préjudiciable en termes de sécurité.

En outre, dans un tel cas, l'opérateur aura tendance à forcer sur les moyens de liaison de manière à les contraindre, soit en compression, soit en traction.

Il est alors nécessaire, outre le réglage long et source éventuelle d'erreurs pour l'opérateur, de surdimensionner les moyens de liaison afin qu'ils ne soient pas endommagés par de telles contraintes.

L'invention vise à remédier en tout ou partie à ces inconvénients, en proposant un dispositif de verrouillage permettant d'éviter un réglage précis des moyens de liaison ainsi qu'un surdimensionnement de ceux-ci.

A cet effet, l'invention concerne un dispositif de verrouillage du type précité, caractérisé en ce que le système de verrouillage est conçu de manière à ce que l'organe de verrouillage demeure immobile lors du déplacement des moyens de liaison sur une seconde partie de la course, en vue de compenser l'ajustement des moyens de liaison ainsi que les défauts de positionnement du système de verrouillage.

De cette manière, seule la première partie de la course permet de verrouiller ou de déverrouiller l'organe de verrouillage. La seconde partie de la course permet de compenser un éventuel décalage des moyens de liaison de manière à s'assurer que, lorsque les moyens de liaison ont été déplacés sur toute leur course par l'opérateur, le système de verrouillage est bien verrouillé ou déverrouillé. Ainsi, il est possible de supprimer le réglage des moyens de liaison. En outre, ces derniers ne sont alors pas soumis à des contraintes élevées par l'opérateur pour verrouiller ou déverrouiller correctement le système de verrouillage.

Selon une possibilité de l'invention, l'organe de verrouillage est un pêne.

Selon une caractéristique de l'invention le dispositif comporte des moyens de transmission reliant les moyens de liaison au pêne, les moyens de transmission comportant une piste présentant au moins une partie active et au moins une partie passive, les moyens de liaison comprenant un élément suiveur se déplaçant le long de la piste, les moyens de transmission étant conçus de manière à ce que le pêne est actionné, respectivement demeure immobile, lors du déplacement de l'élément suiveur le long de la partie active, respectivement passive, de la piste.

Ainsi, un mauvais positionnement de l'élément suiveur par rapport à la piste n'a pas d'effet en ce qui concerne l'actionnement du pêne. En effet, le déplacement des moyens de liaison sur toute leur course assure que l'élément suiveur s'est déplacé le long de la partie active de la piste et que, par conséquent, le pêne a bien été actionné, et cela même en cas de défaut de positionnement de l'élément suiveur par rapport à la piste.

Avantageusement, la piste comporte une première et une seconde parties passives disposées de part et d'autre de la partie active.

Selon une possibilité de l'invention, les moyens de transmission comportent une came reliant le pêne aux moyens de liaison, la came étant conçue pour être entraînée en rotation lors du déplacement des moyens de liaison sur la seule première partie de la course, la came étant conçue de manière à ce que sa rotation entraîne l'actionnement du pêne.

Selon une forme de réalisation de l'invention, les moyens de liaison comportent une première extrémité reliée aux moyens de transmission et une seconde extrémité reliée à une poignée d'actionnement.

Selon une autre forme de réalisation de l'invention, les moyens de liaison comportent une première extrémité reliée aux moyens de transmission et une seconde extrémité reliée à un système de verrouillage additionnel, l'actionnement du système de verrouillage additionnel entraînant le déplacement des moyens de liaison.

L'invention concerne en outre une nacelle de turboréacteur, destinée à équiper un aéronef, comprenant une section avant d'entrée d'air, une section médiane destinée à entourer une soufflante du turboréacteur, et une section arrière formée à partir d'au moins une première et une seconde demi-coquilles montées mobiles en rotation sur un axe de manière à pouvoir se déployer chacune entre une position de travail dans laquelle les demi-coquilles sont rapprochées l'une de l'autre et une position de maintenance dans laquelle les demi-coquilles sont écartées l'une de l'autre, caractérisée en ce qu'elle comporte au moins un dispositif de verrouillage selon l'invention.

L'invention se rapport également à un aéronef, équipé d'au moins une nacelle selon l'invention.

De toute façon, l'invention sera bien comprise à l'aide de la description qui suit en référence au dessin schématique annexé représentant, à titres d'exemples, deux formes de réalisation de ce dispositif de verrouillage.
Figure 1 est une vue schématique d'une nacelle en coupe longitudinale ;
Figure 2 est une vue éclatée de la section arrière de la nacelle, en perspective ;
Figures 3 et 4 sont des vues de face du système de verrouillage, respectivement en positon de verrouillage et en position de déverrouillage ;

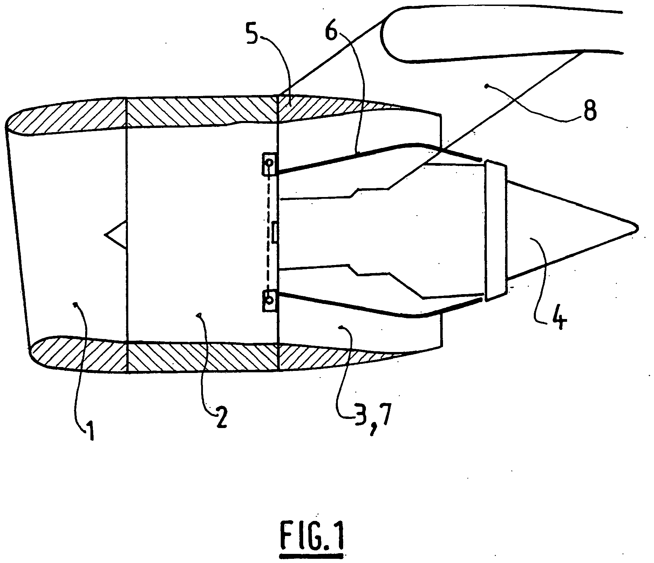

La figure 1 représente une nacelle selon l'invention, destinée à équiper un aéronef. Celle-ci présente une structure tubulaire comprenant une entrée d'air 1 en avant du turboréacteur, une section médiane 2 destinée à entourer une soufflante du turboréacteur, une section arrière 3 pouvant abriter des moyens d'inversion de poussée et destinée à entourer la chambre de combustion du turboréacteur, et est terminée par une tuyère d'éjection 4 dont la sortie est située en aval du turboréacteur.

La nacelle est destinée à abriter un turboréacteur double flux apte à générer par l'intermédiaire des pâles de la soufflante en rotation un flux d'air chaud (également appelé flux primaire) issu de la chambre de combustion du turboréacteur.

La nacelle présente une structure externe 5, dite Outer Fixed Structure (OFS), qui définit, avec une structure interne concentrique 6, dite Inner Fixed Structure (IFS), un canal annulaire d'écoulement 7, encore appelé veine, visant à canaliser un flux d'air froid, dit secondaire, qui circule à l'extérieur du turboréacteur. Les flux primaire et secondaire sont éjectés du turboréacteur par l'arrière de la nacelle.

Chaque ensemble propulsif de l'aéronef est ainsi formé par une nacelle et un turboréacteur, et est suspendu à une structure fixe de l'aéronef, par exemple sous une aile ou sur le fuselage, par l'intermédiaire d'un pylône ou mât 8 rattaché au turboréacteur ou à la nacelle.

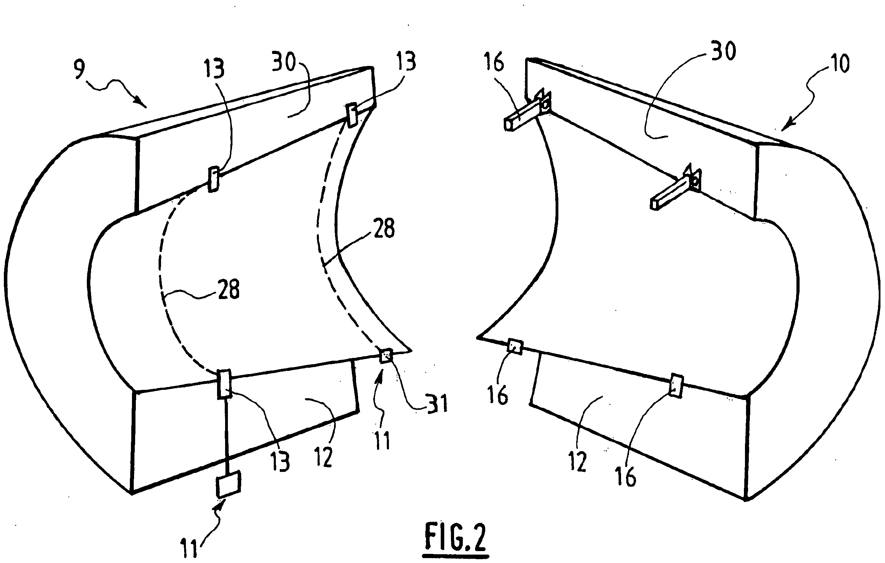

Comme cela apparaît à la figure 2, la section arrière 3 de la structure externe de la nacelle est formée d'une première et d'une deuxième demi-coquilles 9, 10 de forme sensiblement hémicylindrique, de part et d'autre d'un plan vertical longitudinal de symétrie de la nacelle, et montées mobiles de manière à pouvoir se déployer entre une position de travail et une position de maintenance en vue de donner accès au turboréacteur. Les deux demi-coquilles 9, 10 s ont chacune montées pivotantes autour d'un axe formant charnière en partie supérieure (à 12 heures) de l'inverseur. Les demi-coquilles 9, 10 sont maintenues en position de fermeture au moyen de dispositifs de verrouillage 11 disposés le long d'une ligne de jonction 12 située en partie inférieure (à 6 heures). Pour des raisons de lisibilité du dessin, seuls certains des dispositifs de verrouillage 11 ont été représentés.

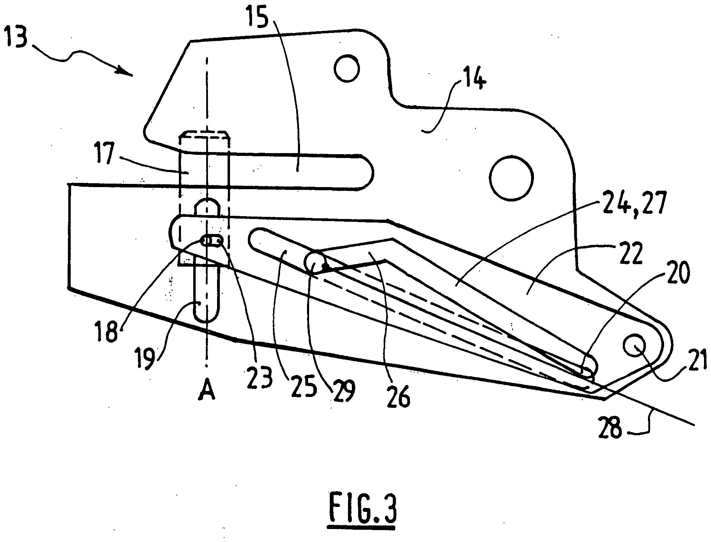

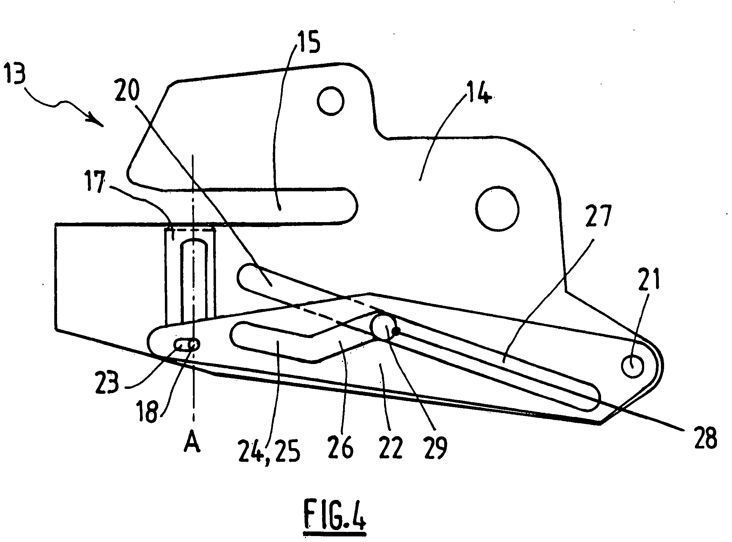

Comme cela est représenté plus particulièrement aux figures 3 et 4, le dispositif de verrouillage 11 comporte un système de verrouillage 13 comprenant un corps 14 fixe par rapport à la première demi-coquille 9 de la nacelle.

Le corps 14 comporte une fente 15 permettant l'insertion d'un organe de retenue 16 fixée à la seconde demi-coquille, comme cela est représenté en figure 2.

Un pêne 17 est monté déplaçable en translation sur le corps 14, selon un axe A perpendiculaire à la fente 15, entre une position de verrouillage dans laquelle le pêne 17 traverse la fente 15 ou fait saillie à l'intérieure de celle-ci, comme cela est représenté à la figure 3, et une position de déverrouillage dans laquelle le pêne 17 est complètement logé à l'intérieur du corps 14 et ne fait pas saillie dans la fente 15, représentée à la figure 4.

Le pêne 17 comporte un plot 18 faisant saillie perpendiculairement à l'axe A et à la fente 15, au travers d'une lumière oblongue 19 ménagée dans le corps 14 suivant l'axe A de manière à permettre le déplacement du pêne 17. Selon une forme de réalisation, le pêne comporte deux plots 18 radialement opposés et s'étendant de part et d'autre du pêne 17 au travers de lumières 19 correspondantes.

Le corps 14 comporte en outre une ouverture oblongue ou une rainure 20, s'étendant obliquement par rapport à la fente 15 et à la lumière oblongue 19, entre une première extrémité située au voisinage de la fente 15 et de la lumière oblongue 19 et une seconde extrémité située au voisinage d'un axe d'articulation 21 dont la fonction est décrite ci-après.

Le dispositif de verrouillage 13 comporte en outre une came 22 de forme allongée, comportant une première et une seconde extrémités. La came est montée pivotante au niveau de sa première extrémité, sur le corps 14 du système de verrouillage 13, autour de l'axe 21. La came 22 comporte en outre un trou oblong 23 au niveau de sa seconde extrémité, le plot 18 du pêne 17 faisant saillie à l'intérieur du trou oblong 23. Plus précisément, le trou oblong 23 s'étend suivant un axe sensiblement perpendiculairement à l'axe A de déplacement du pêne 17.

La came 22 comporte de plus une piste 24 formée par une lumière oblongue en forme générale de marche d'escalier. La piste présente ainsi trois parties successives, à savoir une première partie passive 25, une seconde partie active 26 et une troisième partie passive 27, dont la fonction est détaillée ci-après.

Le dispositif de verrouillage comprend également un câble 28, représenté schématiquement par un trait, comportant une première extrémité d'actionnement. Le câble 28 comprend en outre un doigt 29 au niveau de sa seconde extrémité, le doigt 29 étant inséré dans la piste 24 de la came 22 et dans la rainure 20 du corps 14, de manière à former un élément suiveur. Le câble 28 s'étend, au niveau de sa seconde extrémité, sensiblement selon l'axe de la rainure 20 de sorte que celui-ci n'est soumis à aucune contrainte de flexion mais uniquement à des contraintes de traction et de compression, de sorte que le dimensionnement du câble peut être réduit.

Selon la variante de réalisation envisagée, la première extrémité d'actionnement du câble 28 est rattachée à une poignée ou à un autre système de verrouillage classique ou équipé d'un pêne.

Le fonctionnement du dispositif de verrouillage va maintenant être décrit plus en détail.

Lorsque l'opérateur souhaite déverrouiller le système de verrouillage 13, celui-ci exerce une traction sur le câble 28 par l'intermédiaire d'une commande accessible à 6h, de sorte que le doigt suiveur 29 se déplace le long de la première partie passive 25 de la piste 24.

La première partie passive 25 s'étend parallèlement à l'axe de la rainure 20 dans la position de verrouillage du pêne 17 représentée à la figure 3 de sorte que, lors du déplacement du doigt suiveur 29 le long la première partie passive 25, le pêne 17 demeure immobile et assure le verrouillage des moyens de verrouillage 23.

Le doigt suiveur 29 traverse ensuite la seconde partie active 26 de la piste 24. Celle-ci s'étend obliquement par rapport à la rainure 20, de sorte que le déplacement du doigt suiveur 29 engendre le pivotement de la came 22 dans le sens anti-horaire autour de l'axe 21, entraînant simultanément le déplacement du pêne 17 vers le bas.

Lors de ce déplacement, le plot 18 du pêne 17 translate dans le trou oblong 23 de la came 22, ce qui permet de compenser les écarts de trajectoires entre la trajectoire curviligne de l'extrémité de la came 22 rattachée au pêne 17 et la trajectoire rectiligne A de ce dernier.

Lorsque l'opérateur continue d'exercer une traction sur le câble 28, le doigt suiveur 29 se déplace alors le long de la troisième partie passive 27 de la came 22, s'étendant alors le long de la rainure 20, de sorte que le pêne 17 demeure immobile et assure le verrouillage des moyens de verrouillage 23.

Le verrouillage du système de verrouillage 13 est obtenu par succession inverse des étapes précitées.

Suivant une forme de réalisation de l'invention, l'extrémité d'actionnement est équipée d'une poignée d'actionnement.

Selon une autre forme de réalisation de l'invention, représentée à la figure 2, le système de verrouillage 13 est disposé dans une zone de jonction supérieure 30 (12 heures), le câble 28 reliant le système de verrouillage 13 à un système de verrouillage additionnel 31 disposé au niveau de la zone de jonction inférieure 12. Le système de verrouillage additionnel 31 est conçu pour réaliser le déplacement du câble 28 lors de son actionnement par l'opérateur.

Quelle que soit la variante de réalisation envisagée, le dispositif de verrouillage 11 permet d'éviter un réglage précis, voire même d'éviter tout réglage de la position du doigt suiveur 29 dans la piste 24. En effet, la position précise du doigt suiveur 29 importe peu puisque ce dernier traverse nécessairement la partie active 26 de la piste 24 de sorte que le verrouillage ou le déverrouillage complet du système de verrouillage 13 est assuré. En outre, la présence des parties passives 25, 27 permet de garantir que le doigt suiveur 29 ne vient pas en butée contre l'une des extrémités de la piste 24, ce qui évite à l'opérateur de contraindre le câble 28 par mégarde.

Comme il va de soi l'invention ne se limite pas aux seules formes de réalisation de ce dispositif de verrouillage, décrites ci-dessus à titre d'exemples, mais elle embrasse au contraire toutes les variantes sans sortir du cadre de l'invention qui est défini dans les revendications annexées.

## Revendications

1. Dispositif de verrouillage (11) comprenant au moins un système de verrouillage (13) comportant au moins un organe de verrouillage (17) actionnable par l'intermédiaire de moyens de liaison (28), les moyens de liaison étant déplaçables sur une course déterminée, le déplacement des moyens de liaison (28) sur une première partie de la course permettant l'actionnement de l'organe de verrouillage (17), alternativement entre une position de déverrouillage de l'organe de verrouillage (17) et une position de verrouillage de celui-ci, le système de verrouillage (13) est conçu de manière à ce que l'organe de verrouillage (17) demeure immobile lors du déplacement des moyens de liaison (28) sur une seconde partie de la course, en vue de compenser l'ajustement des moyens de liaison (28) ainsi que les défauts de positionnement du système de verrouillage (13), **caractérisée en ce que** le dispositif comportant en outre des moyens de transmission (22) reliant les moyens de liaison (28) à l'organe de verrouillage (17), les moyens de transmission (22) comportant une piste (24) présentant au moins une partie active (26) et au moins une partie passive (25, 27), les moyens de liaison (28) comprenant un élément suiveur (29) se déplaçant le long de la piste (24), les moyens de transmission (22) étant conçus de manière à ce que l'organe de verrouillage (17) est actionné, respectivement demeure immobile, lors du déplacement de l'élément suiveur (29) le long de la partie active (26), respectivement passive (25, 27), de la piste (24).

2. Dispositif selon la revendication 1, **caractérisé en ce que** l'organe de verrouillage est un pêne.

3. Dispositif selon l'un des revendications 1 ou 2, **caractérisé en ce que** la piste (24) comporte une première et une seconde parties passives (25, 27) disposées de part et d'autre de la partie active (26).

4. Dispositif selon l'une des revendications 1 à 3, **caractérisé en ce que** les moyens de transmission comportent une came (22) reliant le pêne (17) aux moyens de liaison (28), la came (22) étant conçue pour être entraînée en rotation lors du déplacement des moyens de liaison (28) sur la seule première partie de la course, la came (22) étant conçue de manière à ce que sa rotation entraîne l'actionnement du pêne (17).

5. Dispositif selon l'une des revendications 1 à 4, **caractérisé en ce que** les moyens de liaison (28) comportent une première extrémité reliée aux moyens de transmission (22) et une seconde extrémité reliée à une poignée d'actionnement.

6. Dispositif selon la revendication 1 à 5, **caractérisé en ce que** les moyens de liaison (28) comportent une première extrémité reliée aux moyens de transmission (22) et une seconde extrémité reliée à un système de verrouillage additionnel (31), l'actionnement du système de verrouillage additionnel (31) entraînant le déplacement des moyens de liaison (28).

7. Nacelle de turboréacteur, destinée à équiper un aéronef, comprenant une section avant (1) d'entrée d'air, une section médiane (2) destinée à entourer une soufflante du turboréacteur, et une section arrière (3) formée à partir d'au moins une première et une seconde demi-coquilles (9, 10) montées mobiles en rotation sur un axe de manière à pouvoir se déployer chacune entre une position de travail dans laquelle les demi-coquilles (9, 10) sont rapprochées l'une de l'autre et une position de maintenance dans laquelle les demi-coquilles (9, 10) sont écartées l'une de l'autre, **caractérisée en ce qu'**elle comporte au moins un dispositif de verrouillage (11) selon l'une des revendications 1 à 6.

8. Aéronef, **caractérisé en ce qu'**il est équipé d'au moins une nacelle selon la revendication 7.

## Claims

1. A locking device (11) comprising at least one locking system (13) comprising at least one locking member (17) actuable by connection means (28), the connection means being displaceable over a specific travel, the displacement of the connection means (28) over a first part of the travel making it possible to actuate the locking member (17) alternately between a position for unlocking the locking member (17) and a position for locking the latter the locking system (13) is designed in such a way that the locking member (17) remains immobile during the displacement of the connection means (28) over a second part of the travel, for the purpose of compensating the setting of the connection means (28) and the positioning faults of the locking system (13), **characterized in that** the device comprising, furthermore, transmission means (22) linking the connection means (28) to the locking member (17), the transmission means (22) comprising a track (24) having at least one active part (26) and at least one passive part (25, 27), the connection means (28) comprising a follower element (29) which is displaced along the track (24), the transmission means (22) being designed in such a way that the locking member (17) is actuated or remains immobile during the displacement of the follower element (29) along the active part (26) or the passive part (25, 27) of the track (24) respectively.

2. The device as claimed in claim 1, **characterized in that** the locking member is a bolt.

3. The device as claimed in either one of claims 1 and 2, **characterized in that** the track (24) comprises a first and a second passive part (25, 27) arranged on either side of the active part (26).

4. The device as claimed in one of claims 1 to 3, **characterized in that** the transmission means comprise a cam (22) linking the bolt (17) to the connection means (28), the cam (22) being designed to be driven in rotation during the displacement of the connection means (28) over only the first part of the travel, the cam (22) being designed in such a way that its rotation brings about the actuation of the bolt (17).

5. The device as claimed in one of claims 1 to 4, **characterized in that** the connection means (28) comprise a first end linked to the transmission means (22) and a second end linked to an actuating handle.

6. The device as claimed in claims 1 to 5, **characterized in that** the connection means (28) comprise a first end linked to the transmission means (22) and a second end linked to an additional locking system (31), the actuation of the additional locking system (31) bringing about the displacement of the connection means (28).

7. A turbojet engine nacelle intended for equipping an aircraft and comprising a front air inlet section (1), a middle section (2) intended for surrounding a blower of the turbojet engine, and a rear section (3) formed from at least one first and one second half-shell (9, 10) which are mounted movably in terms of rotation on an axis, so as each to be capable of being deployed between an operating position, in which the half-shells (9, 10) are close to one another, and a maintenance position, in which the half-shells (9, 10) are apart from one another, **characterized in that** it comprises at least one locking device (11) as claimed in one of claims 1 to 6.

8. An aircraft, **characterized in that** it is equipped with at least one nacelle as claimed in claim 7.

## Patentansprüche

1. Verriegelungsvorrichtung (11), die mindestens ein Verriegelungssystem (13) umfasst, das mindestens ein über Verbindungsmittel (28) bedienbares Verriegelungsorgan (17) aufweist, wobei die Verbindungsmittel über einen bestimmten Lauf verschiebbar sind, wobei die Verschiebung der Verbindungsmittel (28) über ein erstes Teilstück des Laufs die Bedienung des Verriegelungsorgans (17) abwechselnd zwischen einer Entriegelungsstellung des Verriegelungsorgans (17) und einer Verriegelungsstellung desselben erlaubt, wobei das Verriegelungssystem (13) derart konstruiert ist, dass das Verriegelungsorgan (17) bei der Verschiebung der Verbindungsmittel (28) über ein zweites Teilstück des Laufs unbewegt bleibt, um die Justierung der Verbindungsmittel (28) sowie die Positionierungsfehler des Verriegelungssystems (13) auszugleichen, **dadurch gekennzeichnet, dass** die Vorrichtung ferner Übertragungsmittel (22) aufweist, die die Verbindungsmittel (28) mit dem Verriegelungsorgan (17) verbindet, wobei die Übertragungsmittel (22) einen Weg (24) aufweisen, der mindestens ein aktives Teilstück (26) und mindestens ein passives Teilstück (25, 27) aufweist, wobei die Verbindungsmittel (28) ein Verfolgungselement (29) umfassen, das sich auf dem Weg (24) verschiebt, wobei die Übertragungsmittel (22) derart konstruiert sind, dass das Verriegelungsorgan (17) bei der Verschiebung des Verfolgungselements (29) entlang des aktiven (26) beziehungsweise passiven (25, 27) Teilstücks des Wegs (24) bedient wird beziehungsweise unbewegt bleibt.

2. Vorrichtung nach Anspruch 1, **dadurch gekennzeichnet, dass** das Verriegelungsorgan ein Riegel ist.

3. Vorrichtung nach einem der Ansprüche 1 oder 2, **dadurch gekennzeichnet, dass** der Weg (24) ein erstes und ein zweites passives Teilstück (25, 27) aufweist, die auf der einen und der anderen Seite des aktiven Teilstücks (26) angeordnet sind.

4. Vorrichtung nach einem der Ansprüche 1 bis 3, **dadurch gekennzeichnet, dass** die Übertragungsmittel einen Nocken (22) aufweisen, der den Riegel (17) mit den Verbindungsmitteln (28) verbindet, wobei der Nocken (22) konstruiert ist, um während der Verschiebung der Verbindungsmittel (28) über das einzige erste Teilstück des Laufs rotierend angetrieben zu werden, wobei der Nocken (22) derart konstruiert ist, dass seine Rotation die Bedienung des Riegels (17) bewirkt.

5. Vorrichtung nach einem der Ansprüche 1 bis 4, **dadurch gekennzeichnet, dass** die Verbindungsmittel (28) ein erstes Ende aufweisen, das mit den Übertragungsmitteln (22) verbunden ist, und ein zweites Ende, das mit einem Bediengriff verbunden ist.

6. Vorrichtung nach einem der Ansprüche 1 bis 5, **dadurch gekennzeichnet, dass** die Verbindungsmittel (28) ein erstes Ende aufweisen, das mit den Übertragungsmitteln (22) verbunden ist, und ein zweites Ende, das mit einem zusätzlichen Verriegelungssystem (31) verbunden ist, wobei die Bedienung des zusätzlichen Verriegelungssystems (31) die Verschiebung der Verbindungsmittel (28) bewirkt.

7. Turbotriebwerksgondel, die zur Ausstattung eines Luftfahrzeugs bestimmt ist, die einen vorderen Lufteintrittsabschnitt (1), einen mittleren Abschnitt (2), der dazu bestimmt ist, ein Gebläse des Turbotriebwerks zu umgeben, und einen hinteren Abschnitt (3) umfasst, der von mindestens einer ersten und einer zweiten Halbschale (9, 10) gebildet wird, die in Rotation bewegbar derart auf einer Achse montiert sind, dass sie sich jeweils zwischen einer Arbeitsstellung, in der die Halbschalen (9, 10) einander angenähert ist, und einer Wartungsstellung, in der die Halbschalen (9, 10) voneinander beabstandet sind, bewegen können, **dadurch gekennzeichnet, dass** sie mindestens eine Verriegelungsvorrichtung (11) nach einem der Ansprüche 1 bis 6 aufweist.

8. Luftfahrzeug, **dadurch gekennzeichnet, dass** es mit mindestens einer Gondel nach Anspruch 7 ausgestattet ist.
